# EUROPEAN PATENT APPLICATION

(11) **EP 4 137 449 A1**
(43) Date of publication of application: **22.02.2023**
(21) Application number: 21020419.4
(22) Date of filing: 20.08.2021
(51) Int. Cl.: C01B 3/34

(54) **METHOD AND APPARATUS FOR IMPROVING A REFORMING PROCESS BY USING RENEWABLE ELECTRICAL ENERGY AS A HEATING INPUT TO THE REFORMING PROCESS**

(71) Applicant: L'Air Liquide Société Anonyme pour l'Etude et l'Exploitation des Procédés Georges Claude, 75321 Paris (FR)
(72) Inventor: Samaddar, Mrityunjoy, D-60439 Frankfurt am Main (DE); Kumar, Shrivastava Swatantra, D-60439 Frankfurt am Main (DE)
(74) Representative: Dropsch, Holger

(57) **Abstract**

A method for improving a reforming process by using renewable electrical energy as a heating input to the reforming process is provided. The method includes partially preheating combustion air using a first electrical heater (104), wherein the first electrical heater (104) is configured to be supplied with the renewable electrical energy generated by a renewable source, wherein the first electrical heater (104) is integrated in between a cold air preheater (106) and a hot air preheater (108) of a process plant that performs the reforming process; utilizing, by the first electrical heater (104), a load based on an availability of the renewable electrical energy received from the renewable source; and providing, by the first electrical heater (104), the preheated combustion air at an outlet of the first electrical heater (104) to a boiler (110) of the process plant based on the load utilized by the first electrical heater (104).

## Description

### TECHNICAL FIELD

The present disclosure relates generally to a reforming process; more specifically, the present disclosure relates to a method and apparatus for improving a reforming process by using renewable electrical energy as a heating input to the reforming process.

### BACKGROUND

Producing syngas using a process of reforming hydrocarbons at a high temperature is a well-established known (i.e. "classical") technology. Overall, a steam-reforming reaction is highly endothermic and an associated optimum reaction temperature required for the reaction is relatively high, namely in a range of 700°C to 950°C. For achieving this high reaction temperature, heat is supplied via radiation from flames in a furnace box where fuel is burned in burners. Due to a relatively low radiation efficiency of the reaction and a relatively high reaction temperature, a lot of waste heat is available in an effluent flue gas and an effluent reformed process associated with the reaction, respectively.

Some existing approaches may use part of the aforesaid waste heat for preheating feed and combustion air, and some part of the waste heat for producing superheated steam. For achieving a reasonable thermal efficiency in a process, overall excess steam is produced within the process; a quantity of steam required for implementing the reforming reaction is less than quantity steam produced by the reaction. A high level of heat integration using pinch analysis has thus resulted in a reduction in the steam co-production.

For maximizing a thermal efficiency of a stack when in operation, it is required to minimize a flue gas temperature to the stack. However, a lower flue gas temperature from a cold air preheater (to the stack) results in a lower metal temperature of a cold air preheater surface at a cold end of the stack. For some cases, this metal temperature is below a sulfur dew point (typically 80° to 110 °C depending upon a SO₂ content in the flue gas) of flue gas which results in severe sulfuric acid corrosion. This problem is very common when fuel burned has a relatively high sulfur content and an ambient temperature used is relatively low (cold regions). Therefore, an additional steam-fired air-preheater is required, especially in cold climatic regions, to preheat ambient air before using the preheated ambient air in a cold air preheater in a steam methane reforming (SMR)- waste heat section. The steam-fired preheater adds to additional capital expenditure (CapEx), operational expenditure (OpEx), and CO₂ emissions (equivalent to the steam used). Due to higher temperature at which energy input is required, firing of fuel results in significant waste heat being generated.

Other known approaches may use an electric heater for raising a temperature in a given stack as heating means for heating the combustion air. In such a know approach, electrical power can be used to supply heat at an even higher temperature than is feasible through combustion. However, if the electrical power to be used for such direct heating comes from similar fossil fuel sources, an overall carbon footprint (C-footprint) will be the same or even more since the fuel to electrical power conversion is lower than the fuel to direct heating in the SMR processes. Due to the inherent disadvantage (fuel to electrical conversion to heating by electricity, an efficiency achieved is lower than fuel-to-heat conversion in the SMR process) of using the electrical power for direct heating in the SMR process, it is not applied on a commercial scale.

In the SMR process, at the cold end of the flue gas waste heat section, heat is normally transferred to a boiler (for steam production) and air preheaters (for preheating combustion air). Generally, the air is preheated from ambient temperature to an elevated temperature in a range of 250°C to 500°C.

One biggest disadvantage of using renewable electricity (Solar or wind power) in the context of the SMR-process, is an intermittent nature of supply of such renewable electricity (only during daytime for Solar power and only windy hours for wind power).

Therefore, there is a need to address aforementioned technical drawbacks in existing known technologies in order to improve a reforming process by using renewable electrical energy.

### SUMMARY

The present disclosure seeks to provide an approach for improving a reforming process by using renewable electrical energy as a heating input to the reforming process with minimum impact on design of a process plant that is used to perform the reforming process. An aim of the present disclosure is to provide a solution that overcomes at least partially aforesaid problems encountered in prior art and provide an improved method and apparatus for improving a reforming process by using renewable electrical energy as a heating input to the reforming process that reduces fuel firing in a boiler and thereby reduces CO₂ emissions. The object of the present disclosure is achieved by solutions provided in the herewith appended independent claims. Advantageous implementations of the present disclosure are further defined in the herewith appended dependent claims.

According to a first aspect, the present disclosure provides a method for improving a reforming process by using renewable electrical energy as a heating input to the reforming process, wherein the method comprises:
partially preheating combustion air using a first electrical heater, wherein the first electrical heater is configured to be supplied with the renewable electrical energy generated by a renewable source, wherein the first electrical heater is integrated in between a cold air preheater and a hot air preheater of a process plant that performs the reforming process;
utilizing, by the first electrical heater, a load based on an availability of the renewable electrical energy received from the renewable source; and
providing, by the first electrical heater, the preheated combustion air at an outlet of the first electrical heater to a boiler of the process plant based on the load utilized by the first electrical heater, wherein if the load utilized by the first electrical heater increases, a temperature of the preheated combustion air at the outlet of the first electrical heater and a load on the boiler are proportionally increased, thereby reducing fuel firing in the boiler and associated CO₂ emissions.

The method for improving the reforming process by using the renewable electrical energy as the heating input to the reforming process according to present disclosure is of advantage in that the method enables lower fuel firing in the reforming process as the renewable electrical energy is used to preheat the combustion air, thereby reducing CO₂ emissions and increasing a lifetime of reforming tubes as it reduces a metal temperature of the reforming tubes in the process plant. Moreover, the method enables a partial preheating of the combustion air to be achieved by using the renewable electrical energy with minimum impact on a design of the process plant, and also ensures seamless transformation from zero to peak renewable electricity input.

According to a second aspect, the present disclosure provides a method for improving a reforming process by integrating renewable electrical energy generation therewith, the method comprises:
partially preheating combustion air using a first electrical heater that is supplied with renewable electrical energy generated by a renewable source, wherein the first electrical heater is integrated in between a cold air preheater and a hot air preheater of a process plant that performs the reforming process;
utilizing, by using the first electrical heater, a load based on an availability of the renewable electrical energy received from the renewable source;
providing, by using the first electrical heater, the preheated combustion air at an outlet of the first electrical heater to a boiler of the process plant based on the load utilized by the first electrical heater, wherein if the load utilized by the first electrical heater increases, a temperature of the preheated combustion air at the outlet of the first electrical heater and a load on the boiler are proportionally increased, thereby reducing fuel firing in the boiler and CO₂ emissions; and
utilizing, by using a second electrical heater, a partial load that is located spatially away from the cold air preheater and the hot air preheater in a waste heat section to increase a preheat temperature of the combustion air at an inlet of the cold air preheater when the renewable electrical energy from the renewable source is supplied to the second electrical heater, thereby enabling a higher surface temperature of the cold air preheater and avoiding corrosion resulting from a sulphur dew point.

The method for improving the reforming process by integrating the renewable electrical energy generation therewith according to the present disclosure is of advantage in that the method enables lower fuel firing, thereby reducing CO₂ emissions and increasing a lifetime of the reforming tubes as it reduces a metal temperature of reforming tubes in the process plant. Moreover, the method further enables the higher surface temperature in cold end of the cold air preheater to be achieved, and avoids corrosion in the cold air preheater resulting from the sulphur dew point.

According to a third aspect, the present disclosure provides an apparatus for improving a reforming process by integrating renewable electrical energy therewith, wherein the apparatus comprises:
a first electrical heater that is configured
   to partially preheat combustion air using the renewable electrical energy generated by a renewable source, wherein the first electrical heater is integrated in between a cold air preheater and a hot air preheater of a process plant that performs the reforming process;
   to utilize a load based on an availability of the renewable electrical energy received from the renewable source; and
to provide the preheated combustion air at an outlet of the first electrical heater to a boiler of the process plant based on the load utilized by the first electrical heater, wherein if the load utilized by the first electrical heater increases, a temperature of the preheated combustion air at the outlet of the first electrical heater and a load on the boiler are proportionally increased, thereby reducing fuel firing in the boiler and CO₂ emissions.

The apparatus for improving the reforming process by integrating renewable electrical energy therewith according to present disclosure lowers fuel firing, thereby reducing CO₂ emissions and increasing a lifetime of the reforming tubes as it reduces a metal temperature of reforming tubes in the process plant. Moreover, the apparatus has less impact on design of the process plant and seamlessly operates with zero to peak renewable electricity input.

Embodiments of the present disclosure are capable of eliminating the aforementioned drawbacks in existing known approaches for a reforming process by using renewable electrical energy. The advantage of the embodiments according to the present disclosure is that the embodiments enable lower fuel firing, thereby reducing CO₂ emissions and increasing lifetime of the reforming tubes as it reduces metal temperature of reforming tubes in the process plant.

Additional aspects, advantages, features and objects of the present disclosure are made apparent from the drawings and the detailed description of the illustrative embodiments construed in conjunction with the appended claims that follow. It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. To illustrate the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, the same elements have been indicated by identical numbers. Embodiments of the present disclosure will now be described, by way of example only, with reference to the following diagrams wherein:
FIG. 1 is a schematic illustration of an apparatus for improving a reforming process by integrating renewable electrical energy generation therewith according to an embodiment of the present disclosure;
FIG. 2 is a flowchart illustrating a method for improving a reforming process by using renewable electrical energy as a heating input to the reforming process according to an embodiment of the present disclosure; and
FIG. 3 is a flowchart illustrating a method for improving a reforming process by integrating renewable electrical energy generation therewith according to an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

According to a first aspect, the present disclosure provides a method for improving a reforming process by using renewable electrical energy as a heating input to the reforming process, wherein the method comprises: partially preheating combustion air using a first electrical heater, wherein the first electrical heater is configured to be supplied with the renewable electrical energy generated by a renewable source, wherein the first electrical heater is integrated in between a cold air preheater and a hot air preheater of a process plant that performs the reforming process; utilizing, by the first electrical heater, a load based on an availability of the renewable electrical energy received from the renewable source; and providing, by the first electrical heater, the preheated combustion air at an outlet of the first electrical heater to a boiler of the process plant based on the load utilized by the first electrical heater, wherein if the load utilized by the first electrical heater increases, a temperature of the preheated combustion air at the outlet of the first electrical heater and a load on the boiler are proportionally increased, thereby reducing fuel firing in the boiler and CO₂ emissions.

The method for improving the reforming process by using the renewable electrical energy as the heating input to the reforming process according to the present disclosure is of advantage in that the method enables lower fuel firing, thereby reducing CO₂ emissions and increasing a lifetime of the reforming tubes as it reduces metal temperature of reforming tubes in the process plant.

The method for improving the reforming process has less impact on the design of the process plant. Moreover, the method ensures seamless operation of the reforming process in the process plant with zero to peak renewable electricity input.

Optionally, an overall air preheat temperature at the outlet of the hot air preheater, going to burners of the process plant is constant. Optionally, if the hot air preheater utilizes less load, the load available on the boiler situated downstream in flue gas flow direction is high, thereby increasing steam production when the first electrical Heater is taking more load. Such an increase in steam production improves thermal efficiency and lowers operating expenditure (OpEx) of the reforming process.

For example, for applications where steam value is relatively high (say, more than ∼70% of fuel value), additional steam may be exported which means higher thermal efficiency and lower OpEx, and lower carbon footprint. For applications where steam value is relatively lower, additional steam can be used within the reforming process. More steam used for the reforming process may result in higher feed conversion. This results in reduced fuel firing and/or reduced feed and overall reduced CO₂ emissions.

The fuel for firing may be natural gas, liquid hydrocarbon, coal, tar, petroleum coke, and naphtha.

Optionally, the method includes preheating the combustion air to a temperature that is in a range of 250°C to 500°C.

Optionally, the method includes supplying the first electrical heater with the renewable electrical energy in a range of 0 watt (W) to 3000 kilowatt (kW).

Optionally, the method includes utilizing the preheated combustion air for firing in the reforming process if a reforming temperature is in a range of 750°C to 950°C.

Optionally, the method includes arranging for a steam to carbon ratio used to be in a range of 1.0 to 10.0.

Optionally, the method further includes controlling, using a control unit, an outlet temperature of the preheated combustion air provided by the first electrical heater. The control unit is configured to connect the load or the outlet temperature provided by the first electrical heater.

For example, for each degree (or fraction of a degree) rise in the outlet temperature from the first electrical heater, fuel firing in the reforming process can be reduced accordingly. Optionally, each degree rise in the outlet temperature from the first electrical heater is calculated using a well-defined equation based on estimations/simulations of such scenarios.

Optionally, the method further includes utilizing, using a second electrical heater, a partial load away from the cold air preheater and the hot air preheater in a waste heat section to increase a preheat temperature of the combustion air at an inlet of the cold air preheater when the renewable electrical energy from the renewable source is supplied to the second electrical heater, thereby enabling a higher surface temperature of the cold air preheater and avoiding corrosion resulting from a sulphur dew point. Moreover, the method may enable more steam production to be achieved by using the second electrical heater.

Optionally, the second electrical heater is installed at a suction region of a combustion air fan.

Optionally, the method includes arranging for the load utilized by the second electrical heater to increase for each degree fall in the surface temperature of the cold air preheater. Optionally, each degree fall in the surface temperature of the cold air preheater is calculated using a well-defined equation based on estimations/simulations of such scenarios.

Optionally, the method includes preheating the combustion air using steam before preheating the combustion air using a flue gas. The combustion air is heated using a third electrical heater that is supplied with the renewable electrical energy generated by the renewable source.

Optionally, the method includes generating the renewable electrical energy from a renewable energy source. The renewable energy source includes at least one of wind energy, solar energy, hydroelectric source, or biomass source.

Optionally, the method includes using ambient air in a temperature range of -10°C to 20°C.

Optionally, the method includes using a sulfur dew point of the flue gas for air preheating in a range of 80°C to 110°C. Optionally, the flue gas from the air preheating is in a range of 120°C to 160°C.

Optionally, the method includes arranging for the process plant to be a steam methane reforming (SMR) process plant. The steam methane reforming process plant is a part of a chemical plant producing hydrogen (H₂), methanol, ammonia, syngas or chemicals in downstream sections

According to a second aspect, the present disclosure provides a method for improving a reforming process by integrating renewable electrical energy generation therewith, the method comprising: partially preheating combustion air using a first electrical heater that is supplied with renewable electrical energy generated by a renewable source, wherein the first electrical heater is integrated in between a cold air preheater and a hot air preheater of a process plant that performs the reforming process; utilizing, by using the first electrical heater, a load based on an availability of the renewable electrical energy received from the renewable source; providing, by using the first electrical heater, the preheated combustion air at an outlet of the first electrical heater to a boiler of the process plant based on the load utilized by the first electrical heater, wherein if the load utilized by the first electrical heater increases, a temperature of the preheated combustion air at the outlet of the first electrical heater and a load on the boiler are proportionally increased, thereby reducing fuel firing in the boiler and CO₂ emissions; and utilizing, by using a second electrical heater, a partial load that is located spatially away from the cold air preheater and the hot air preheater in a waste heat section to increase a preheat temperature of the combustion air at an inlet of the cold air preheater when the renewable electrical energy from the renewable source is supplied to the second electrical heater, thereby enabling a higher surface temperature of the cold air preheater and avoiding corrosion resulting from a sulphur dew point.

The method for improving the reforming process by integrating the renewable electrical energy generation therewith according to the present disclosure is of advantage in that the method enables a lower fuel firing to be achieved, thereby reducing CO₂ emissions and increasing lifetime of the reforming tubes as it reduces a metal temperature of reforming tubes in the process plant. The method further enables a higher surface temperature to be achieved in a cold end of the cold air preheater and avoids corrosion in the cold air preheater resulting from the sulphur dew point.

Optionally, the method includes controlling the surface temperature of the cold air preheater using a second control unit that controls the surface temperature of the cold air preheater based on the load utilized by the second electrical heater.

According to a third aspect, the present disclosure provides an apparatus for improving a reforming process by integrating renewable electrical energy therewith: wherein the apparatus comprises: a first electrical heater that is configured to partially preheat combustion air using the renewable electrical energy generated by a renewable source, wherein the first electrical heater is integrated in between a cold air preheater and a hot air preheater of a process plant that performs the reforming process; to utilize a load based on an availability of the renewable electrical energy received from the renewable source; and to provide the preheated combustion air at an outlet of the first electrical heater to a boiler of the process plant based on the load utilized by the first electrical heater, wherein if the load utilized by the first electrical heater increases, a temperature of the preheated combustion air at the outlet of the first electrical heater and a load on the boiler are proportionally increased, thereby reducing fuel firing in the boiler and CO₂ emissions.

The apparatus for improving the reforming process by integrating renewable electrical energy therewith according to present disclosure lowers fuel firing, thereby reducing CO₂ emissions and increasing lifetime of the reforming tubes as it reduces metal temperature of reforming tubes in the process plant. Moreover, the apparatus has less impact on design of the process plant and seamlessly operate with zero to peak renewable electricity input.

A table below includes an example of a green electricity integrated in an existing SMR process using the method of the present disclosure.

| Parameters | Existing approach | Present apparatus |
|---|---|---|
| H2 Production, Nm³/hr | 56000 | 56000 |
| Steam co-Production, kg/hr | 0 | 0 |
| S/C Ratio | 3.05 | 3.05 |
| Reforming temperature, °C | 885 | 882 |
| Flue Gas Temperature ex Reformer, °C | 1051 | 1046 |
| Air preheat Temperature, °C | 450 | 450 |
| Green Electricity input, kW (Note 1) | 0 | 500 |
| Internal Steam Production, kg/hr | 50454 | 50808 |
| SMR duty, MW | 55.4 | 55.2 |
| CO₂ Emission from flue gas, Tons/hr | 43.2 | 43.1 |
| NG Feed + Fuel, Nm³/hr | 20700 | 20664 |
| NG feed, Nm³/hr | 20120 | 20249 |
| NG Fuel, Nm³/hr | 579 | 415 |
| Feed + Fuel saving, Nm³/hr | - | 36 |
| Feed + Fuel saving, LHV basis, kW | - | 357 |
| Feed + Fuel saving, % | - | 0.17% |

Optionally, the method enables a saving of approximately 330 kW equivalent of supplementary fuel firing in SMR (e.g., Natural Gas (NG)) for 500 kW of renewable electrical energy, with an approximately 0.25% reduction in CO₂ emission from the flue gas and also an increased reformer tube lifetime because of relatively less NG firing. Additionally, the method enables to reduce sulfur dew point underrun/corrosion problems in Cold Air Preheaters (APHs).

Optionally, a LP steam air preheater is replaced before the combustion air preheater, thereby enabling a minimum metal temperature in cold air preheater to be increased by 20°C, thereby eliminating sulfuric acid corrosion problem if sulfur is used as a fuel.

Embodiments of the present disclosure substantially eliminate or at least partially address the aforementioned technical drawbacks in existing technologies in improving reforming process by using renewable electrical energy as the heating input to the reforming process.

### DETAILED DESCRIPTION OF THE DRAWINGS

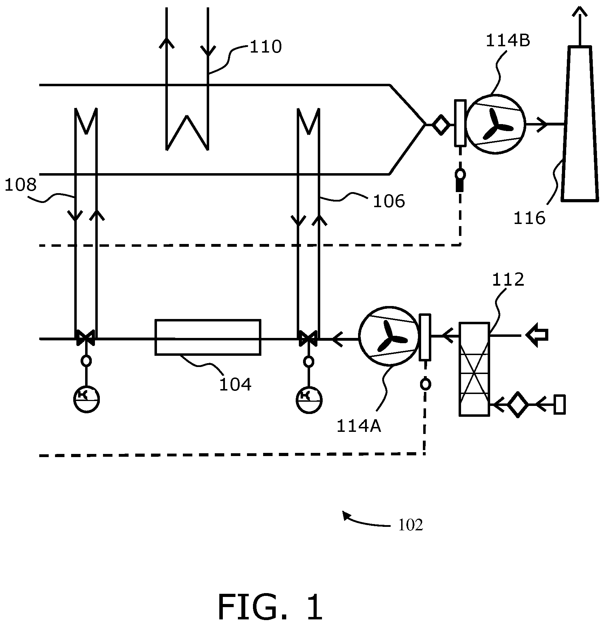

**FIG. 1** is a schematic illustration of an apparatus **102** for improving a reforming process by integrating renewable electrical energy generation therewith according to an embodiment of the present disclosure. The apparatus **102** includes a first electrical heater **104,** a cold air preheater **106,** a hot air preheater **108** and a boiler **110.** The first electrical heater **104** is configured to partially preheat combustion air using the renewable electrical energy generated by a renewable source. The first electrical heater **104** is integrated in between the cold air preheater **106** and the hot air preheater **108** of a process plant that performs the reforming process. The first electrical heater **104** is configured to utilize a load based on an availability of the renewable electrical energy received from the renewable source. The first electrical heater **104** is configured to provide the preheated combustion air at an outlet of the first electrical heater **104** to the boiler **110** of the process plant based on the load utilized by the first electrical heater **104.** If the load utilized by the first electrical heater **104** increases, a temperature of the preheated combustion air at the outlet of the first electrical heater **104** and a load on the boiler **110** are proportionally increased, thereby reducing fuel firing in the boiler **110** and CO₂ emissions.

Optionally, the apparatus **102** further includes a second electrical heater **112,** a combustion air fan **114A,** a flue gas fan **114B,** and a flue gas stack **116.** Optionally, the second electrical heater **112** utilizes a partial load that is located spatially away from the cold air preheater **106** and the hot air preheater **108** in a waste heat section to increase a preheat temperature of the combustion air at an inlet of the cold air preheater **106** when the renewable electrical energy from the renewable source is supplied to the second electrical heater **112,** thereby enabling a higher surface temperature of the cold air preheater **106** and avoiding corrosion resulting from a sulphur dew point.

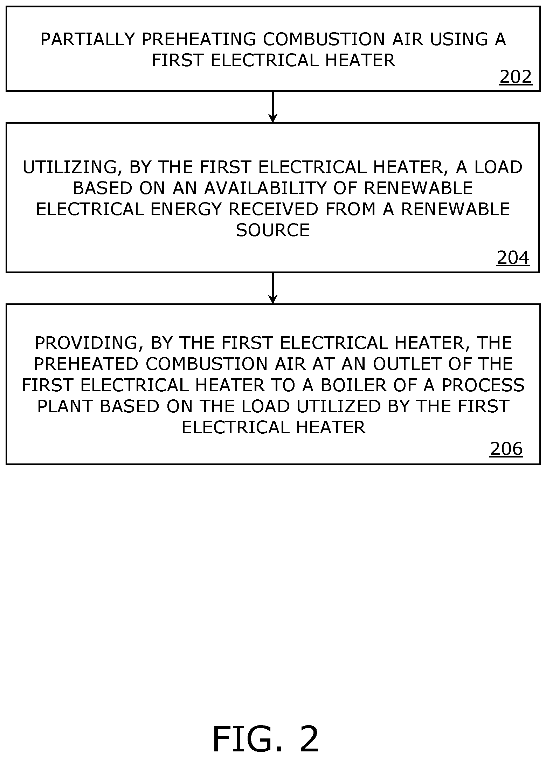

**FIG. 2** is a flowchart illustrating a method for improving a reforming process by using renewable electrical energy as a heating input to the reforming process according to an embodiment of the present disclosure. At a step **202,** combustion air is partially preheated using a first electrical heater. The first electrical heater is configured to be supplied with the renewable electrical energy generated by a renewable source. The first electrical heater is integrated in between a cold air preheater and a hot air preheater of a process plant that performs the reforming process. At a step **204,** a load is utilized by the first electrical heater based on an availability of the renewable electrical energy received from the renewable source. At a step **206,** the preheated combustion air is provided at an outlet of the first electrical heater, by the first electrical heater, to a boiler of the process plant based on the load utilized by the first electrical heater. If the load utilized by the first electrical heater increases, a temperature of the preheated combustion air at the outlet of the first electrical heater and a load on the boiler are proportionally increased, thereby reducing fuel firing in the boiler and CO₂ emissions.

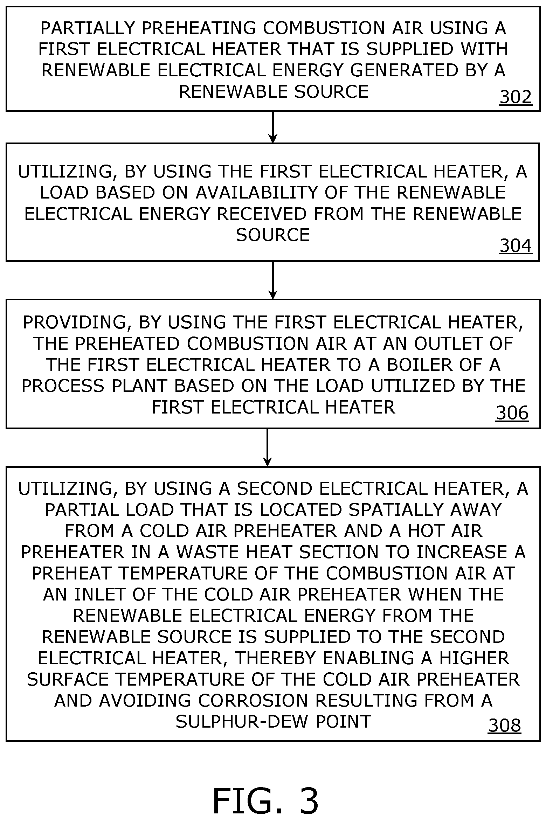

**FIG. 3** is a flowchart illustrating a method for improving a reforming process by integrating renewable electrical energy generation therewith according to an embodiment of the present disclosure. At a step **302,** combustion air is partially preheated using a first electrical heater that is supplied with renewable electrical energy generated by a renewable source. The first electrical heater is integrated in between a cold air preheater and a hot air preheater of a process plant that performs the reforming process. At a step **304,** a load is utilized by the first electrical heater, based on availability of the renewable electrical energy received from the renewable source. At a step **306,** the preheated combustion air is provided at an outlet of the first electrical heater, by using the first electrical heater, to a boiler of the process plant based on the load utilized by the first electrical heater. If the load utilized by the first electrical heater increases, a temperature of the preheated combustion air at the outlet of the first electrical heater and a load on the boiler are proportionally increased, thereby reducing fuel firing in the boiler and CO₂ emissions. At a step **308,** a partial load that is located spatially away from the cold air preheater and the hot air preheater in a waste heat section, is utilized by using a second electrical heater to increase a preheat temperature of the combustion air at an inlet of the cold air preheater when the renewable electrical energy from the renewable source is supplied to the second electrical heater, thereby enabling a higher surface temperature of the cold air preheater to be achieved and avoiding corrosion resulting from a Sulphur-dew point.

Modifications to embodiments of the present disclosure described in the foregoing are possible without departing from the scope of the present disclosure as defined by the accompanying claims. Expressions such as "including", "comprising", "incorporating", "have", "is" used to describe, and claim the present disclosure are intended to be construed in a non-exclusive manner, namely allowing for items, components or elements not explicitly described also to be present. Reference to the singular is also to be construed to relate to the plural.

### LIST OF REFERENCE NUMERALS

- 102-: apparatus
- 104-: first electrical heater
- 106-: cold air preheater
- 108-: hot air preheater
- 110-: boiler
- 112-: second electrical heater
- 114A-: combustion air fan
- 114B-: flue gas fan
- 116-: flue gas stack

## Claims

1. A method for improving a reforming process by using renewable electrical energy as a heating input to the reforming process, wherein the method comprises:
partially preheating combustion air using a first electrical heater (104), wherein the first electrical heater (104) is configured to be supplied with the renewable electrical energy generated by a renewable source, wherein the first electrical heater (104) is integrated in between a cold air preheater (106) and a hot air preheater (108) of a process plant that performs the reforming process;
utilizing, by the first electrical heater (104), a load based on an availability of the renewable electrical energy received from the renewable source; and
providing, by the first electrical heater (104), the preheated combustion air at an outlet of the first electrical heater (104) to a boiler (110) of the process plant based on the load utilized by the first electrical heater (104), wherein if the load utilized by the first electrical heater (104) increases, a temperature of the preheated combustion air at the outlet of the first electrical heater (104) and a load on the boiler (110) are proportionally increased, thereby reducing fuel firing in the boiler (110) and CO₂ emissions.

2. The method according to claim 1, wherein the method includes preheating the combustion air to a temperature that is in a range of 250°C to 500°C.

3. The method according to claim 1 or 2, wherein the method includes supplying the first electrical heater (104) with the renewable electrical energy in a range of 0 watt (W) to 3000 kilowatt (kW).

4. The method according to any one of the preceding claims, wherein the method includes utilizing the preheated combustion air for firing in the reforming process if a reforming temperature is in a range of 750°C to 950°C.

5. The method according any one of the preceding claims, wherein the method includes arranging for a steam to carbon ratio used to be in a range of 1.0 to 10.0.

6. The method according to any one of the preceding claims, wherein the method further includes controlling, using a control unit, an outlet temperature of the preheated combustion air provided by the first electrical heater (104), wherein the control unit is configured to connect the load or the outlet temperature provided by the first electrical heater (104).

7. The method according to any one of the preceding claims, wherein the method further includes utilizing, using a second electrical heater (112), a partial load away from the cold air preheater (106) and the hot air preheater (108) in a waste heat section to
increase a preheat temperature of the combustion air at an inlet of the cold air preheater (106) when the renewable electrical energy from the renewable source is supplied to the second electrical heater (112), thereby enabling a higher surface temperature of the cold air preheater (106) to be achieved and avoiding corrosion resulting from a sulphur dew point.

8. The method according to claim 7, wherein the method includes arranging for the load utilized by the second electrical heater (112) to increase for each degree fall in the surface temperature of the cold air preheater (106).

9. The method according to any one of the preceding claims, wherein the method includes preheating the combustion air using steam before preheating using a flue gas, wherein the combustion air is heated using a third electrical heater that is supplied with the renewable electrical energy generated by the renewable source.

10. The method according to any one of the preceding claims, wherein the method includes generating the renewable electrical energy from a renewable energy source, wherein the renewable energy source includes at least one of wind energy, solar energy, hydroelectric source, or biomass source.

11. The method according to claim 9, wherein the method includes using ambient air in a temperature range of -10°C to 20°C.

12. The method according to claim 9, wherein the method includes using a sulfur dew point of the flue gas for air preheating in a range of 80°C to 110°C.

13. The method according to claim 9, wherein the flue gas from the air preheating is in a range of 120°C to 160°C.

14. The method according to any one of claims 1 to 13, wherein the method includes arranging for the process plant to be a Steam Methane Reforming (SMR) process plant, wherein the Steam Methane Reforming process plant is a part of a chemical plant producing hydrogen (H₂), methanol, ammonia, syngas or chemicals in downstream sections.

15. A method for improving a reforming process by integrating renewable electrical energy generation therewith, wherein the method comprises:
partially preheating combustion air using a first electrical heater (104) that is supplied with renewable electrical energy generated by a renewable source, wherein the first electrical heater (104) is integrated in between a cold air preheater (106) and a hot air preheater (108) of a process plant that performs the reforming process;
utilizing, by using the first electrical heater (104), a load based on availability of the renewable electrical energy received from the renewable source;
providing, by using the first electrical heater (104), the preheated combustion air at an outlet of the first electrical heater (104) to a boiler (110) of the process plant based on the load utilized by the first electrical heater (104), wherein if the load utilized by the first electrical heater (104) increases, a temperature of the preheated combustion air at the outlet of the first electrical heater (104) and a load on the boiler (110) are proportionally increased, thereby reducing fuel firing in the boiler (110) and CO₂ emissions; and
utilizing, by using a second electrical heater (112), a partial load that is located spatially away from the cold air preheater (106) and the hot air preheater (108) in a waste heat section to increase a preheat temperature of the combustion air at an inlet of the cold air preheater (106) when the renewable electrical energy from the renewable source is supplied to the second electrical heater (112), thereby enabling a higher surface temperature of the cold air preheater (106) and avoiding corrosion resulting from a Sulphur-dew point.

16. The method according to claim 15, wherein the method includes controlling the surface temperature of the cold air preheater (106) using a second control unit that controls the surface temperature of the cold air preheater (106) based on the load utilized by the second electrical heater (112).

17. An apparatus (102) for improving a reforming process by integrating renewable electrical energy therewith, wherein the apparatus (102) comprises:
a first electrical heater (104) that is configured
to partially preheat combustion air using the renewable electrical energy generated by a renewable source, wherein the first electrical heater (104) is integrated in between a cold air preheater (106) and a hot air preheater (108) of a process plant that performs the reforming process;
to utilize a load based on an availability of the renewable electrical energy received from the renewable source; and
to provide the preheated combustion air at an outlet of the first electrical heater (104) to a boiler (110) of the process plant based on the load utilized by the first electrical heater (104), wherein if the load utilized by the first electrical heater (104) increases, a temperature of the preheated combustion air at the outlet of the first electrical heater (104) and a load on the boiler (110) are proportionally increased, thereby reducing fuel firing in the boiler (110) and CO₂ emissions.
